(19)

Europäisches
Patentamt
European
Patent Office
Office européen
des brevets

(11)  **EP 4 212 907 B1**

(12)                    **EUROPEAN PATENT SPECIFICATION**

(45) Date of publication and mention
of the grant of the patent:
**03.12.2025  Bulletin 2025/49**

(51) International Patent Classification (IPC):
**G01S 7/486** (2020.01)          **G01S 17/10** (2020.01)

(21) Application number: **20957645.3**

(22) Date of filing: **14.10.2020**

(52) Cooperative Patent Classification (CPC):
**G01S 17/10; G01S 7/4868**

(86) International application number:
**PCT/JP2020/038689**

(87) International publication number:
**WO 2022/079816 (21.04.2022 Gazette 2022/16)**

(54) **OPTICAL DISTANCE MEASUREMENT DEVICE AND OPTICAL DISTANCE MEASUREMENT METHOD**

OPTISCHE ABSTANDSMESSVORRICHTUNG UND OPTISCHES ABSTANDSMESSVERFAHREN

DISPOSITIF OPTIQUE DE MESURE DE DISTANCE ET PROCÉDÉ OPTIQUE DE MESURE DE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.07.2023  Bulletin 2023/29**

(73) Proprietor: **NEC Corporation
108-8001 Tokyo (JP)**

(72) Inventor: **NOGUCHI Hidemi
Tokyo 108-8001 (JP)**

(74) Representative: **Vossius & Partner
Patentanwälte Rechtsanwälte mbB
Siebertstraße 3
81675 München (DE)**

(56) References cited:
**JP-A- 2006 337 302          JP-A- 2006 337 302
JP-A- 2019 144 230          JP-A- 2019 144 230
US-A1- 2011 116 072          US-A1- 2011 116 072
US-A1- 2018 224 547**

## Description

### Technical Field

The present invention relates to an optical distance measurement device and an optical distance measurement method.

### Background Art

An optical distance measurement device (also referred to as a light detection and ranging (LiDAR)) that measures a distance to an object by using light is known. Since the optical distance measurement device can acquire a distance to an object in a wide range from a remote place, the device is used for diagnosis and prediction, by strain measurement of a bridge and the like, of deterioration of an infrastructure facility, or disaster prevention and disaster prediction by strain measurement of a slope of a mountain and the like. In addition, since the optical distance measurement device can detect and specify an obstacle object and a suspicious object over a wide range even in the dark, the device is also used for security and monitoring, such as monitoring of an airport. Further, the optical distance measurement device has started to attract attention as a sensor for automatic driving.
US 2018/224547 A1 relates to a method and system for doppler detection and doppler correction of optical phase-encoded range detection.

As a related technique, for example, Patent Literature 1 is known. An optical distance measurement device of a time of flight (ToF) method is disclosed in Patent Literature 1.

### Citation List

### Patent Literature

[Patent Literature 1] Japanese Unexamined Patent Application Publication No.2014-202610

### Summary of Invention

The invention is specified by the independent claims. Preferred embodiments are defined in the dependent claims. In the following description, although numerous features may be designated as optional, it is nevertheless acknowledged that all features comprised in the independent claims are not to be read as optional.

### Technical Problem

As described above, a ToF method is adopted in the optical distance measurement device of the related technique. In the ToF method, a distance to an object is measured by a time period from transmission of a light pulse to detection of reception of a reflected pulse being reflected from the object. However, in the related technique, there is a problem that it may be difficult to measure at desired reception sensitivity depending on a measurement condition.

In view of such a problem, an object of the present disclosure is to provide an optical distance measurement device and an optical distance measurement method that are capable of achieving high sensitivity.

### Solution to Problem

An optical distance measurement device according to the present disclosure includes: a light transmission means for transmitting distance measurement light to a measurement object; a light reception means for receiving reflected light being reflected from the measurement object by the transmitted distance measurement light; a modulation means for generating reference light acquired by performing intensity modulation on a light source according to a distance measurement range; a detection means for generating a reception signal by causing the received reflected light and the generated reference light to interfere with each other; and a distance calculation means for calculating a distance to the measurement object, based on the transmitted distance measurement light and the generated reception signal.

An optical distance measurement method according to the present disclosure includes: transmitting distance measurement light to a measurement object; receiving reflected light being reflected from the measurement object by the transmitted distance measurement light; generating reference light acquired by performing intensity modulation on a light source according to a distance measurement range; generating a reception signal by causing the received reflected light and the generated reference light to interfere with each other; and calculating a distance to the measurement object, based on the transmitted distance measurement light and the generated reception signal.

**Advantageous Effects of Invention**

According to the present disclosure, an optical distance measurement device and an optical distance measurement method that are capable of achieving high sensitivity can be provided.

**Brief Description of Drawings**

Fig. 1 is a diagram for describing a principle of distance measurement of a ToF method;
Fig. 2 is a configuration diagram illustrating a configuration example of an optical distance measurement device of a basic example;
Fig. 3 is a timing chart illustrating an example of a signal in the optical distance measurement device of the basic example;
Fig. 4 is a configuration diagram illustrating an outline of an optical distance measurement device according to an example embodiment;
Fig. 5 is a configuration example illustrating a configuration example of an optical distance measurement device according to a first example embodiment;
Fig. 6 is a timing chart illustrating an example of a signal in the optical distance measurement device according to the first example embodiment;
Fig. 7 is a timing chart illustrating an example of a signal in the optical distance measurement device of a comparative example;
Fig. 8 is a timing chart illustrating an example of a signal in an optical distance measurement device according to a second example embodiment;
Fig. 9 is a timing chart illustrating an example of a signal in an optical distance measurement device according to a third example embodiment;
Fig. 10 is a timing chart illustrating an example of a signal in an optical distance measurement device according to a fourth example embodiment;
Fig. 11 is a timing chart illustrating an example of a signal in an optical distance measurement device according to a fifth example embodiment;
Fig. 12 is a timing chart illustrating an example of a signal in an optical distance measurement device according to a sixth example embodiment;
Fig. 13 is a timing chart illustrating an example of a signal in the optical distance measurement device according to the sixth example embodiment;
Fig. 14 is a timing chart illustrating an example of a signal in an optical distance measurement device according to a seventh example embodiment; and
Fig. 15 is a timing chart illustrating an example of a signal in an optical distance measurement device according to an eighth example embodiment.

**Example Embodiment**

Hereinafter, example embodiments will be described with reference to the drawing. In each drawing, a similar element is denoted by a similar reference sign, and redundant description is omitted as necessary. Note that, an arrow illustrated in a configuration diagram (block diagram) is an example for description, and does not limit a kind or a direction of a signal.

(Consideration of Basic Example)

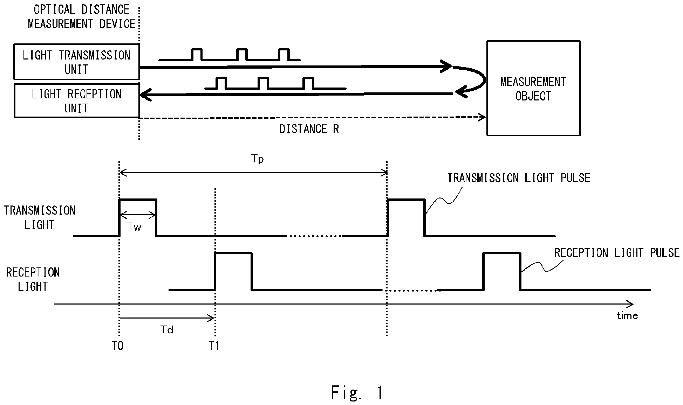

First, a principle of distance measurement of a ToF method being a base of the example embodiment, and an optical distance measurement device according to a basic example will be described. Fig. 1 illustrates the principle of distance measurement of the ToF method. As illustrated in Fig. 1, in the ToF method, the optical distance measurement device transmits distance measurement light including a transmission light pulse, receives reflected light being reflected from a measurement object, and measures a distance R from the optical distance measurement device to the measurement object, based on a transmission time of the transmission light pulse and an arrival time (reception time) of a reception light pulse included in the reflected light.
As illustrated in Fig. 1, for example, the optical distance measurement device repeatedly transmits a transmission light pulse having a pulse width Tw at a distance measurement period Tp. The distance measurement period and the pulse width are set according to measurement application, performance of the optical distance measurement device, and the like. For example, the pulse width Tw is several tens of nanoseconds (ns). Assuming that a return pulse delay time from a rising time T0 of a transmission light pulse to a rising time T1 of a reception light pulse is Td, the distance R is acquired by the following equation (1). Herein, C is a speed of light, and the return pulse delay time Td is a delay time having about 6.6 ns/m.
[Mathematical 1]

$$R = \frac{C\,T_d}{2} \quad \cdots (1)$$

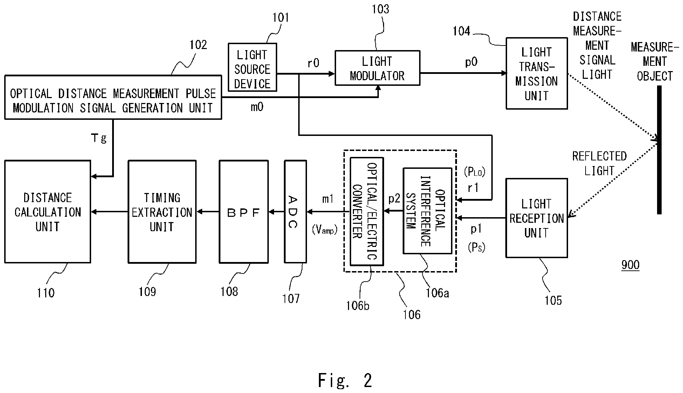

Fig. 2 illustrates a configuration of the optical distance measurement device of the basic example. An optical distance measurement device 900 of the basic example is a LiDAR device of a ToF method using coherent detection. As illustrated in Fig. 2, the optical distance measurement device 900 of the basic example includes a light source device 101, an optical distance measurement pulse modulation signal generation unit 102, a light modulator 103, a light transmission unit 104, a light reception unit 105, a coherent light receiver 106, an ADC 107, a BPF 108, a timing extraction unit 109, and a distance calculation unit 110.

For example, the light source device 101, the optical distance measurement pulse modulation signal generation unit 102, and the light modulator 103 are an optical distance measurement pulse generation unit that generates an optical distance measurement pulse, and the optical distance measurement pulse generation unit and the light transmission unit 104 are a transmission unit (transmission side) of the optical distance measurement device 900. In addition, the light reception unit 105, the coherent light receiver 106, the ADC 107, the BPF 108, the timing extraction unit 109, and the distance calculation unit 110 are a reception unit (reception side) of the optical distance measurement device 900.

The light source device 101 is a light source device such as a laser that generates a light source r0 (e.g., a frequency f0) for generating a transmission light pulse. The optical distance measurement pulse modulation signal generation unit 102 generates a modulation signal m0 that modulates the light source r0 in order to generate a transmission light pulse. In addition, the optical distance measurement pulse modulation signal generation unit 102 outputs a transmission trigger signal Tg at a timing of generating (modulating) a transmission light pulse.

Based on the modulation signal m0, the light modulator 103 generates a transmission light pulse acquired by performing an intensity modulation and a phase modulation on the light source r0, and outputs a transmission light signal p0 including the generated transmission light pulse. For example, the light modulator 103 performs the phase modulation on the light source r0, based on the modulation signal m0(I, Q), and thereby generates a transmission light pulse having a predetermined frequency offset. The light modulator 103 is, for example, a Mach-Zehnder (MZ) type IQ light modulator.

The light transmission unit 104 transmits the transmission light signal p0 including the transmission light pulse as a distance measurement signal light. The light transmission unit 104 is a transmission optical system such as a lens, and emits, as parallel light, the transmission light signal p0 to a measurement object. The light reception unit 105 receives reflected light being reflected from the measurement object, and outputs a reception light signal p1 including a reception light pulse. The light reception unit 105 is a reception optical system such as a lens, similarly to the light transmission unit 104. Note that, each of the light transmission unit 104 and the light reception unit 105 may be configured by an independent optical system, or may be configured by the same optical system as a light transmission/reception block including the light transmission unit 104 and the light reception unit 105.

In this example, it is assumed that light of the light source device 101 on the transmission side is branched, and thereby becomes reference light r1 for interfering with the reception light signal p1. Note that, a light source device may be provided on the reception side, and the light source device on the reception side may generate the reference light r1 having the same frequency (e.g., f0) as the light source r0 on the transmission side.

The coherent light receiver (coherent detector) 106 generates (detects) a reception signal m1 by causing the reception light signal p1 including the reception light pulse and the reference light r1 to interfere with each other. The reception signal m1 is an IQ reception signal including a signal (m1(I)) having an in-phase component and a signal (m1(Q)) having a quadrature component with respect to the reference light r1.

The coherent light receiver 106 includes an optical interference system 106a and an optical/electric converter 106b. The optical interference system 106a causes the reception light signal p1 and the reference light r1 to interfere with each other, and thereby generates an interference light signal p2 including a light signal p2(I) having an in-phase component and a light signal p2(Q) having a quadrature component. The optical/electric converter 106b photoelectrically converts each of the in-phase component and the quadrature component of the interference light signal p2, and thereby generates the reception signal m1.

Note that, it is possible to use, as the coherent light receiver 106, a coherent light receiver consisting of a 90° hybrid mixer and balanced receiver used in general digital coherent optical communication, thus, by a similar principle as optical communication, it is possible to perform demodulation (coherent detection) on a signal being transmitted from the transmission side at the reception side.

The analog-to-digital converter (ADC) 107 is an AD converter that performs AD conversion on the photoelectrically converted reception signal m1. The band pass filter (BPF) 108 extracts only a reception light pulse portion of the reception signal, based on a frequency of the AD-converted reception signal m1. Note that, the reception light pulse may be extracted, not only based on a predetermined frequency but also based on predetermined signal intensity.

The timing extraction unit 109 specifies a reception time (arrival time) of a reception light pulse from a rising timing of a signal being extracted by the BPF 108. The distance calculation unit 110 calculates a distance of a measurement object from the transmission time of the transmission light pulse and the reception time of the reception light pulse. The distance calculation unit 110 calculates the distance of the measurement object, based on a time difference between a time of a transmission trigger signal Tg indicating the transmission timing of the transmission light pulse and a time of a rising timing of the reception light pulse.

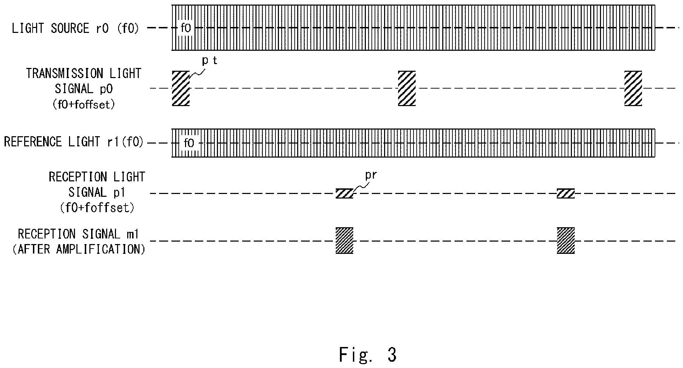

Fig. 3 illustrates an example of a signal in the optical distance measurement device 900 of the basic example. As illustrated in Fig. 3, the light source device 101 on the transmission side generates the light source r0 having the optical frequency f0.

The light modulator 103 generates a transmission light pulse pt in response to the modulation signal m0. For example, the transmission light pulse pt to be generated becomes a light signal whose phase is monotonically increased by the modulation signal m0, and a frequency of the light signal becomes f0+foffset acquired by adding a frequency offset foffset to the frequency f0 of the light source. The light transmission unit 104 transmits a transmission light signal p0 including the generated transmission light pulse pt.

On the other hand, on the reception side, as described above, light of the light source device 101 on the transmission side is branched, and thereby becomes the reference light r1 having the optical frequency f0. Therefore, in the basic example, the reference light r1 always has constant intensity, similarly to the light source r0.

The light reception unit 105 receives a reception light signal p1 including a reception light pulse pr. For example, as an ideal reception signal, a light signal having the same optical frequency as that of the transmission side is received. In other words, the optical frequency of the reception light pulse is f0+foffset.

The optical interference system 106a of the coherent light receiver 106 causes the reception light signal p1 and the reference light r1 to interfere with each other according to a principle of general coherent IQ reception being used in digital coherent optical communication, and further generates the reception signal m1 by performing photoelectric conversion and amplifying by the optical/electric converter 106b. The reception signals m1(I) and m1(Q) being output from the coherent light receiver 106 have the same waveform as the modulation signals m0(I) and m0(Q) on the transmission side.

As illustrated in Fig. 3, light intensity of the reception signal m1 being performed photoelectric conversion and amplification has a pulse waveform of a constant level at the same timing as the reception light pulse pr. The BPF 108 extracts only the reception light pulse portion of the reception signal, based on the frequency of the reception signal m1, and the timing extraction unit 109 specifies the reception time of the reception light pulse from a rising edge of the signal of the extracted reception light pulse portion. The distance calculation unit 110 calculates a distance of a measurement object from the transmission time of the transmission light pulse pt and the reception time of the reception light pulse pr.

Herein, reception sensitivity of the reception side (receiver) of the optical distance measurement device will be considered. In Fig. 3, light intensity of the reception light signal p1 (reception light pulse pr) is illustrated as constant, but the intensity of the reception light signal p1 varies depending on a measurement environment. For example, when a distance of an object far away from the optical distance measurement device is measured, the intensity of the reception light signal p1 is greatly attenuated. Current values $I_I$ and $I_Q$ of the reception signal m1 being acquired from the reception light signal p1 and the reference light r1 are expressed by the following equations (2) and (3).

[Mathematical 2]

$$I_I(t) = R\sqrt{P_s(t)P_{LO}}\cos\{\theta_s(t) + \theta_n(t)\} \quad \cdots (2)$$

[Mathematical 3]

$$I_Q(t) = R\sqrt{P_s(t)P_{LO}}\sin\{\theta_s(t) + \theta_n(t)\} \quad \cdots (3)$$

In the equations (2) and (3), R is sensitivity of the optical/electric converter 106b, $P_S$ is intensity of the reception light signal p1, $P_{LO}$ is intensity of the reference light r1, $\theta_s$ is a phase modulation of the reception light signal p1, and $\theta_n$ is a difference of a phase fluctuation between the reception light signal p1 and the reference light r1. From the equations (2) and (3), relation among the intensity $P_S$ of the reception light signal p1 and the intensity $P_{LO}$ of the reference light r1, and a voltage of the reception signal m1 after amplification is expressed by the following equation (4). In other words, a voltage level $V_{amp}$ of the reception signal m1 is proportional to 1/2-th power of a value acquired by multiplying the $P_S$ by the $P_{LO}$.
[Mathematical 4]

$$V_{amp} \propto \sqrt{P_S P_{LO}} \quad \cdots (4)$$

In the equation (4), since the Ps is determined by a measurement condition, amplitude of the reception signal depends on magnitude of the $P_{LO}$. Therefore, the reception sensitivity can be improved by increasing the $P_{LO}$. On the other hand, in order to increase the $P_{LO}$, since a light amplifier (e.g., included in an optical/electric converter) that consumes a large amount of power is required, there is a problem that power consumption increases. Therefore, in the example embodiment, it is possible to achieve high sensitivity of a receiver while suppressing an increase in power consumption in the optical distance measurement device of the ToF method using coherent detection.

(Outline of Example Embodiment)

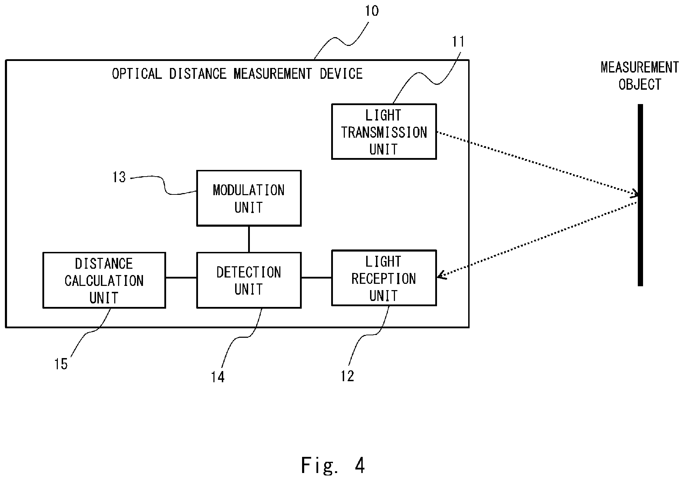

Fig. 4 illustrates an outline of the optical distance measurement device according to the example embodiment. As illustrated in Fig. 4, an optical distance measurement device 10 according to the example embodiment includes a light transmission unit 11, a light reception unit 12, a modulation unit 13, a detection unit 14, and a distance calculation unit 15.
The light transmission unit 11 transmits a distance measurement light to a measurement object. The optical reception unit 12 receives reflected light being reflected from the measurement object by the transmitted distance measurement light. The modulation unit 13 generates reference light acquired by a light source being performed an intensity modulation according to a distance measurement range. The detection unit 14 generates a reception signal by causing the received reflected light and the reference light generated by performing the intensity modulation to interfere with each other. The distance calculation unit 15 calculates a distance to the measurement object, based on the transmitted distance measurement light and the generated reception signal.
As described above, in the example embodiment, reference light is performed the intensity modulation according to a distance measurement range, the modulated reference light and reception light is caused to interfere with each other, and thereby a reception signal is generated. Thus, it is possible to achieve high sensitivity of a receiver. For example, in a case where the distance measurement range is far from the optical distance measurement device or in a predetermined distance measurement range, it is possible to acquire necessary sensitivity by increasing intensity of the reference light. In addition, by making average power of the reference light constant and the same as power of a light source before the intensity modulation, even without using a light amplifier that consumes a large amount of power, it is possible to improve reception sensitivity, and to perform further long distance measurement.

(First Example Embodiment)

Hereinafter, a first example embodiment will be described with reference to the drawing. In the present example embodiment, an example in which reference light is changed to a pulse will be described.

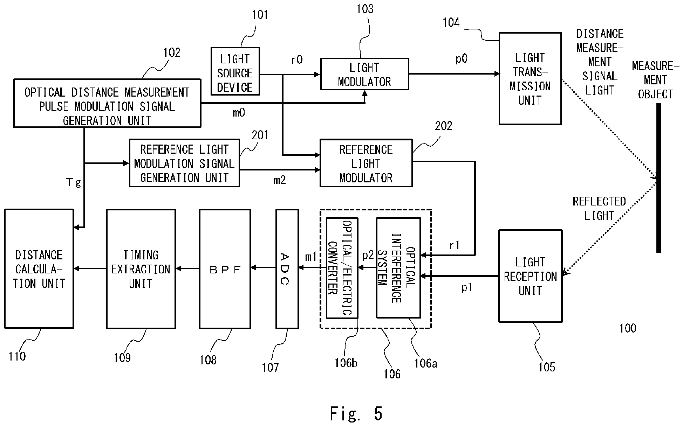

Fig. 5 illustrates a configuration of an optical distance measurement device according to the present example embodiment. Similarly to the basic example, an optical distance measurement device 100 is a LiDAR device of a ToF method using coherent detection. As illustrated in Fig. 5, the optical distance measurement device 100 according to the present example embodiment includes a reference light modulation signal generation unit 201 and a reference light modulator 202, in addition to a configuration of the basic example.
The reference light modulation signal generation unit 201 generates a modulation signal m2 for performing the intensity modulation on a light source r0 in order to generate reference light. The reference light modulation signal generation unit 201 generates the modulation signal m2 in such a way that reference light r1 has predetermined intensity at a predetermined timing after transmission light pulse is generated (after a transmission trigger signal Tg).
Based on the modulation signal m2, the reference light modulator 202 performs the intensity modulation on the light source r0, and thereby generates the reference light r1. For example, the reference light modulator 202 generates the reference light r1 of a pulse having predetermined intensity and a predetermined width at a predetermined timing according to a distance measurement range as described later. As described above, the light source r0 to be modulated may use light branched from a light source device 101 on a transmission side, or may use light output from a light source device on a reception side. Note that, the reference light modulator 202 may be any modulator being capable of the intensity modulation, and a specific configuration is not particularly limited.

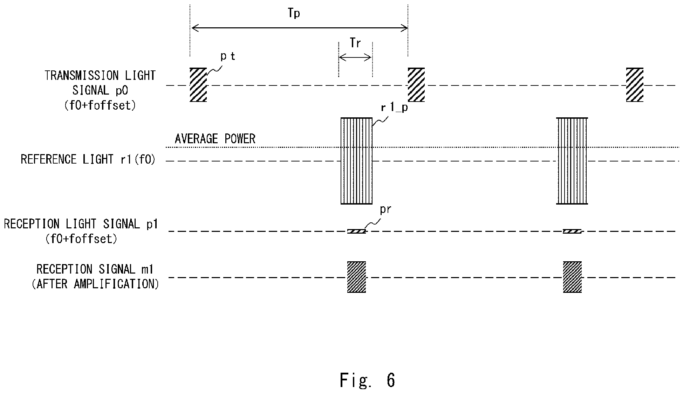

Fig. 6 illustrates an example of a signal in the optical distance measurement device 100 according to the present example embodiment. Similarly to the basic example, in the transmission side of the optical distance measurement device 100, the light source device 101 generates the light source r0 having an optical frequency f0, and a light modulator 103 generates a transmission light pulse pt having the optical frequency f0+foffset in response to a modulation signal m0.

On the other hand, in the reception side of the optical distance measurement device 100, the reference light modulator 202 performs the intensity modulation on the light source r0 in response to the modulation signal m2, and generates the reference light r1. The optical frequency of the reference light r1 is f0 being the same as the light source r0 on the transmission side. In the present example embodiment, by performing the intensity modulation on the light source r0, the reference light r1 is changed to a pulse, and peak power increases. In other words, intensity of the reference light r1 changes to a pulse type. In addition, average power of the reference light r1 is constant, and is the same as power of the reference light r1 of the basic example before an application of the example embodiment. In other words, in a distance measurement period Tp (or a plurality of distance measurement periods Tp), the average power of the reference light r1 is the same as the power of the reference light r1 of the basic example (the power of the light source before the intensity modulation).

In this example, for each distance measurement period Tp, one beam of reference light r1 (referred to as a reference light pulse r1_p) being changed to a pulse is generated. The reference light pulse r1_p is generated according to a predetermined distance measurement range (distance measurement period) Tr within the distance measurement period Tp. The distance measurement range Tr is a range for measuring a distance of an object from the optical distance measurement device 100, and is a range from a first distance (first timing) to a second distance (second timing) within the distance measurement period Tp. The distance measurement range Tr is a range in which reception of a reception light pulse pr is awaited (receivable), and can also be said to be a range specified by an elapsed time from generation (transmission) of a transmission light pulse pt. In addition, a pulse width of the reference light pulse r1_p is wider than a pulse width Tw of the transmission light pulse (or the reception light pulse), and is, for example, twice or more of the transmission light pulse.

For example, for each distance measurement period Tp (for each transmission of the transmission light pulse), the reference light pulse r1_p is generated in the distance measurement range Tr having a different distance from the light distance measurement device 100. For example, in order of measurement (generation) for each distance measurement period Tp, the reference light pulse r1_p is generated in such a way that the distance measurement range Tr becomes far from the light distance measurement device 100 or the distance measurement range Tr becomes close to the light distance measurement device 100, between a minimum value and a maximum value that can be measured within the distance measurement period Tp. Accordingly, a distance of a measurement object can be measured in an entire range from a close distance (short distance) to a great distance (long distance).

Similarly to the basic example, when a light reception unit 105 receives a reception light signal p1 including the reception light pulse pr having the optical frequency f0+foffset, a coherent light receiver 106 generates a reception signal m1 by causing the reception light pulse pr and the reference light pulse r1_p to interfere with each other. By using the reference light r1 being performed the intensity modulation, a signal level of the received signal m1 increases in response to the intensity of the reference light r1. Therefore, even when a distance of a measurement object is far and the intensity of the reception light pulse pr is small, reception sensitivity can be improved by increasing the signal level of the reception signal m1 by the intensity of the reference light r1.

The intensity of the reference light pulse r1_p can be set from a relationship between the average power and the pulse width of the reference light pulse r1_p. Therefore, although the intensity of the reference light can be increased and sensitivity can be improved as the pulse width of the reference light pulse r1_p is narrowed, a measurable range is narrowed, and thus the number of times of measurement for measuring the entire range is increased. On the other hand, although the measurable range is widened and the number of times of measurement can be reduced as the pulse width of the reference light pulse r1_p is widened, since the intensity of the reference light is weakened, the sensitivity is lowered. Therefore, it is preferable to set the pulse width of the reference light pulse in consideration of the permissible sensitivity and the number of measurements.

As described above, in the present example embodiment, by performing the intensity modulation on reference light according to a distance measurement range and thereby changing the reference light to a pulse, and generating a reception signal by using the reference light being changed to a pulse, it is possible to improve reception sensitivity according to the distance measurement range. For example, a distance in an entire range can be measured by performing measurement a plurality of times while changing the distance measurement range for each measurement. In addition, by changing the reference light to a pulse according to the distance measurement range, it is possible to keep average power of the reference light constant (the same power as the basic example), and achieve high sensitivity while suppressing power of a light amplifier.

(Second Example Embodiment)

Hereinafter, a second example embodiment will be described with reference to the drawing. In the present example embodiment, an example in which reference light is changed to a pulse similarly to the first example embodiment and further reference light pulses are overlapped with each other for each measurement will be described. Note that, a configuration of an optical distance measurement device is similar to that of the first example embodiment.

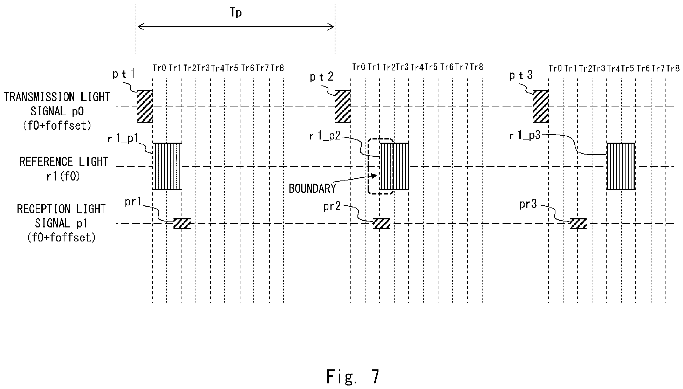

Fig. 7 illustrates reference light of a comparative example based on the optical distance measurement device according to the first example embodiment. As illustrated in Fig. 7, in the comparative example, transmission light pulses are transmitted in order of pt1 to pt3, and a reference light modulator 202 generates reference light pulses r1_p1 to r1_p3 while shifting a distance measurement range Tr toward a great distance (long distance) side for each transmission of the transmission light pulse.

For example, distance measurement ranges Tr0 to Tr8 having predetermined intervals are set within a distance measurement period Tp, and a reference light pulse is generated according to the distance measurement ranges Tr0 to Tr8. For example, a pulse width of the transmission light pulse (reception light pulse) is the same as each set distance measurement range Tr (distance measurement range unit), and a pulse width of the reference light pulse is twice the pulse width (distance measurement range unit) of the transmission light pulse.

In the example in Fig. 7, first, after transmission of the transmission light pulse pt1, the reference light pulse r1_p1 is generated in the distance measurement ranges Tr0 to Tr1, and then, after transmission of the transmission light pulse pt2, the reference light pulse r1_p2 is generated in the distance measurement ranges Tr2 to Tr3 being shifted from the distance measurement ranges Tr0 to Tr1 by two distance measurement range units. Further, after transmission of the transmission light pulse pt3, the reference light pulse r1_p3 is generated in the distance measurement ranges Tr4 to Tr5 being shifted from the distance measurement ranges Tr2 to Tr3 by two distance measurement range units.

In this example, for each transmission of the transmission light pulse (for each measurement), the reference light pulse is generated while shifting the distance measurement range Tr by two distance measurement range units (twice the pulse width of the transmission light pulse=the pulse width of the reference light pulse). In this case, ranges (distance measurement ranges) of the reference light pulses in the distance measurement period Tp do not overlap before and after a measurement order (generation order) with each other, and a boundary occurs between a previous reference light pulse and a next reference light pulse (the next time of the previous time). For example, in the reference light pulse r1_p1 and the reference light pulse r1_p2, a boundary occurs between the distance measurement range Tr1 and the distance measurement range Tr2, and in the reference light pulse r1_p2 and the reference light pulse r1_p3, for example, a boundary occurs between the distance measurement range Tr3 and the distance measurement range Tr4.

Therefore, in the comparative example, when a reception light pulse is received at a timing of a boundary of the reference light pulse (a boundary of the distance measurement range), a reception signal cannot be generated normally. In the example in Fig. 7, each of reception light pulses pr1 to pr3 are received with respect to each of the transmission light pulses pt1 to pt3, and the reception light pulses pr1 to pr3 is across the boundary between the distance measurement range Tr1 and the distance measurement range Tr2. In other words, the reception light pulse is received from the middle of the distance measurement range Tr1 to the middle of the distance measurement range Tr2. Between the distance measurement range Tr1 and the distance measurement range Tr2 is a boundary between the reference light pulse r1_p1 and the reference light pulse r1_p2. Therefore, even when the reference light pulse r1_p2 (or r1_p1) and the reception light pulse pr2 (or pr1) are caused to interfere with each other, the reception signal cannot be generated. In the present example embodiment, even in such a case, the reception signal can be normally generated.

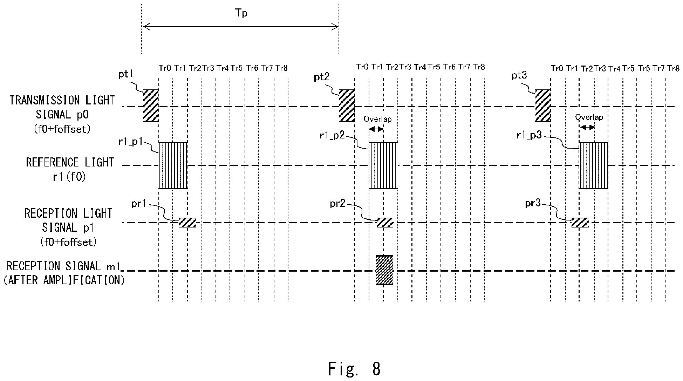

Fig. 8 illustrates an example of reference light of an optical distance measurement device according to the present example embodiment. As illustrated in Fig. 8, in the present example embodiment, the reference light modulator 202 generates reference light while shifting the distance measurement range Tr to the great distance side in a range (time) smaller than that of the comparative example for each transmission of the transmission light pulses pt1 to pt3.

In the example in Fig. 8, first, after transmission of the transmission light pulse pt1, the reference light pulse r1_p1 is generated in the distance measurement ranges Tr0 to Tr1, and then, after transmission of the transmission light pulse pt2, the reference light pulse r1_p2 is generated in Tr1 to Tr2 being shifted from the distance measurement ranges Tr0 to Tr1 by one distance measurement range unit. Further, after transmission of the transmission light pulse pt3, the reference light pulse r1_p3 is generated in Tr2 to Tr3 being shifted from the distance measurement ranges Tr1 to Tr2 by one distance measurement range unit.

In this example, for each transmission of the transmission light pulse (for each measurement), the reference light pulse is generated while shifting the distance measurement range Tr by one distance measurement range unit (the pulse width of the transmission light pulse=1/2 of the pulse width of the reference light pulse). In other words, ranges (distance measurement ranges) of the reference light pulses in the distance measurement period Tp overlap before and after the measurement order (generation order) with each other. An overlapping width is, for example, one distance measurement range unit (pulse width of the transmission light pulse (reception light pulse)). In order to be able to receive the reception light pulse in the range of the reference light pulse, at least the overlapping width is preferably equal to or more than the transmission light pulse (reception light pulse).

In the example in Fig. 8, the reference light pulse r1_p1 and the reference light pulse r1_p2 overlap with each other in the distance measurement range Tr1, and the reference light pulse r1_p2 and the reference light pulse r1_p3 overlap with each other in the distance measurement range Tr2. Therefore, even when the reception light pulses pr1 to pr3 are received across the boundary between the distance measurement range Tr1 and the distance measurement range Tr2, a reception signal m1 can be normally generated by causing the reference light pulse r1_p2 and the reception light pulse pr2 to interfere with each other.

As described above, in the present example embodiment, reference light is changed to a pulse while being overlapped for each measurement (for each distance measurement range). Thus, a reception signal can be generated even when a reception light pulse is received at any timing. For example, even when the reception light pulse is received at a boundary of the distance measurement range, distance measurement can be reliably performed.

(Third Example Embodiment)

Hereinafter, a third example embodiment will be described with reference to the drawing. In the present example embodiment, an example in which reference light is changed to a pulse similarly to the first example embodiment and further intensity of a reference light pulse is made to be variable according to a distance measurement range will be described. Note that, a configuration of an optical distance measurement device is similar to that of the first example embodiment.

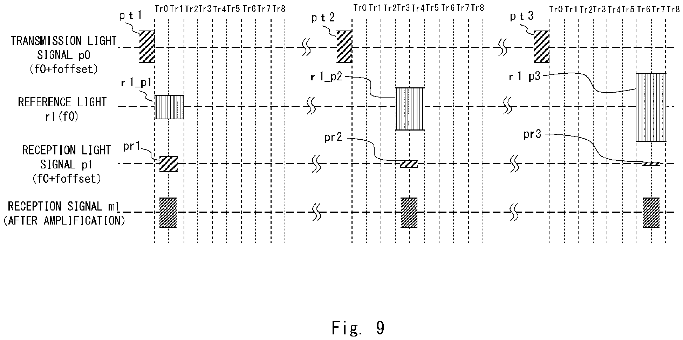

Fig. 9 illustrates an example of reference light of the optical distance measurement device according to the present example embodiment. Fig. 9 is an example in which a close distance (short distance) is measured by a transmission light pulse pt1, a medium distance farther than the close distance is measured by a transmission light pulse pt2, and a great distance (long distance) farther than the medium distance is measured by a transmission light pulse pt3.

As illustrated in Fig. 9, in the present example embodiment, a reference light modulator 202 makes intensity of reference light variable according to a distance to be measured (distance measurement range), and increases the intensity of the reference light as the distance to be measured increases. In other words, the intensity of the reference light in a case where the distance measurement range is far from the optical distance measurement device is stronger than the intensity of the reference light in a case where the distance measurement range is close to the optical distance measurement device. In addition, average power of the reference light in entire measurement from the close distance to the great distance is kept constant similarly to the first example embodiment.

For example, when measurement is performed in distance measurement ranges Tr0 to Tr1 being the close distance, a reference light pulse r1_p1 having first intensity is generated. In addition, when measurement is performed in distance measurement ranges Tr3 to Tr4 being the medium distance, a reference light pulse r1_p2 having second intensity stronger than the first intensity is generated. Further, when measurement is performed in distance measurement ranges Tr6 to Tr7 being the great distance, a reference light pulse r1_p3 having third intensity stronger than the second intensity is generated. In other words, as a distance to be measured increases, intensity of a reception light pulse decreases, while the intensity of the reference light pulse increases. For example, the intensity of the reference light may be changed for each distance measurement period. Note that, in this example, a pulse width of each reference light pulse is the same, and is, for example, twice a pulse width of the transmission light pulse (reception light pulse) similarly to the second example embodiment.

As described above, in the present example embodiment, intensity of reference light is made to be variable according to a distance to be measured, and the intensity of the reference light is made stronger as the distance to be measured becomes a longer distance. Thus, it is possible to prevent a signal level of a reception signal from decreasing according to the distance to be measured, and to improve reception sensitivity. In addition, it is possible to achieve high sensitivity over a longer distance while keeping average power of the reference light constant.

(Fourth Example Embodiment)

Hereinafter, a fourth example embodiment will be described with reference to the drawing. In the present example embodiment, an example in which reference light is changed to a pulse similarly to the first example embodiment and further intensity of a reference light pulse is made to be variable in a specific distance measurement range will be described. Note that, a configuration of an optical distance measurement device is similar to that of the first example embodiment.

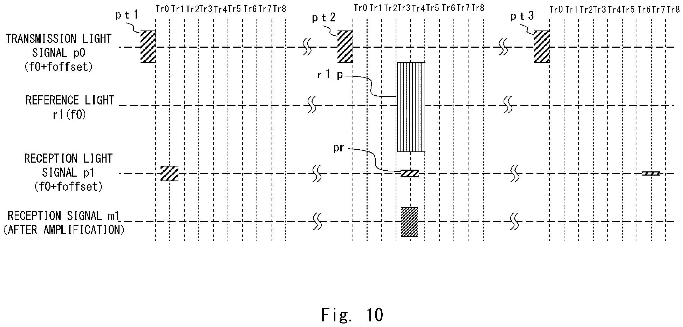

Fig. 10 illustrates an example of reference light of the optical distance measurement device according to the present example embodiment. Fig. 10 is an example, similarly to Fig. 9, of a signal for a measurement object in each of a close range, a medium range, and a great range with respect to each of transmission light pulses pt1, pt2, and pt3.

As illustrated in Fig. 10, in the present example embodiment, a reference light modulator 202 makes intensity of reference light variable according to a distance to be measured (distance measurement range), and increases the intensity of the reference light when the distance to be measured is a specific distance. In other words, the intensity of the reference light in a specific distance measurement range is stronger than the intensity of the reference light in another distance measurement range. In addition, average power of the reference light in entire measurement from the close distance to the great distance is kept constant similarly to the first example embodiment. For example, reference light pulse r1_p is generated when being measured in distance measurement ranges Tr3 to Tr4 being the medium distance, and the reference light pulse is not generated (output) at another distance (distance measurement range). In other words, the intensity of the reference light is increased only when a specific distance (medium distance) is measured. Note that, when another distance is measured, reference light having intensity weaker than that of the reference light in the specific distance may be generated.

As described above, in the present example embodiment, intensity of reference light is made to be variable according to a distance to be measured, and the intensity of the reference light is increased only when the distance to be measured is a specific distance (e.g., a medium distance), and is extinguished at another distance (a close distance or a long distance). In other words, power of the reference light is concentrated only when the specific distance is measured, and measurement is not performed at another distance. Thus, a SNR of a reception signal can be increased by improving sensitivity of the specific distance, therefore, distance measurement accuracy of the specific distance can be improved.

(Fifth Example Embodiment)

Hereinafter, a fifth example embodiment will be described with reference to the drawing. In the present example embodiment, an example in which reference light is changed to a pulse similarly to the first example embodiment and further intensity and a pulse width of a reference light pulse are made to be variable according to a distance measurement range will be described. Note that, a configuration of an optical distance measurement device is similar to that of the first example embodiment.

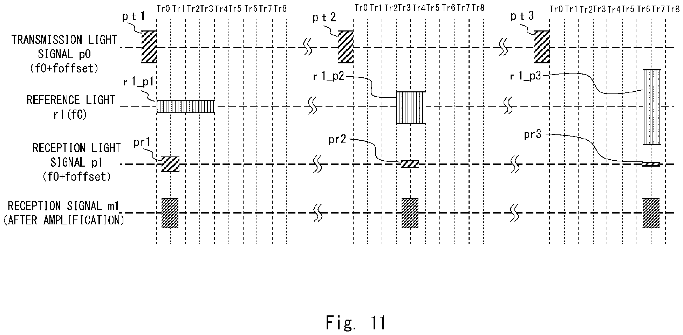

Fig. 11 illustrates an example of reference light of the optical distance measurement device according to the present example embodiment. Fig. 11 is an example, similarly to Fig. 9, for monitoring a close distance, a medium distance, and a great distance by transmission light pulses pt1, pt2, and pt3.

As illustrated in Fig. 11, in the present example embodiment, a reference light modulator 202 makes intensity of reference light variable according to a distance to be measured (distance measurement range), increases the intensity of the reference light as the distance to be measured increases, and narrows a pulse width. In other words, the reference light in a case where the distance measurement range is far from the optical distance measurement device has stronger intensity and a narrower pulse width than the reference light in a case where the distance measurement range is close to the optical distance measurement device. Note that, a width in a specific distance measurement range may be narrower than a width in another distance measurement range. In addition, average power of the reference light in measurement from the close distance to the great distance is kept constant similarly to the first example embodiment.

For example, when the close distance is measured, a reference light pulse r1_p1 having first intensity and a first pulse width is generated. In this example, the reference light pulse r1_p1 is generated in distance measurement ranges Tr0 to Tr3, and the first pulse width is four times a pulse width of the transmission light pulse (reception light pulse). In addition, when the medium distance is measured, a reference light pulse r1_p2 having second intensity stronger than the first intensity and a second pulse width narrower than the first pulse width is generated. In this example, the reference light pulse r1_p2 is generated in distance measurement ranges Tr3 to Tr4, and the second pulse width is twice the pulse width of the transmission light pulse (reception light pulse). Further, when a long distance is measured, a reference light pulse r1_p3 having third intensity stronger than the second intensity and a third pulse width narrower than the second pulse width is generated. In this example, the reference light pulse r1_p3 is generated from the middle of a distance measurement range Tr6 to the middle of a Tr7, and the third pulse width is the same as the pulse width of the transmission light pulse (reception light pulse).

As described above, in the present example embodiment, not only intensity of reference light but also a pulse width is made to be variable according to a distance to be measured. As the distance to be measured becomes a closer distance, the intensity of the reference light becomes weaker and the pulse width becomes wider, and as the distance to be measured becomes a longer distance, the intensity of the reference light becomes stronger and the pulse width becomes narrower, and thereby sensitivity for measuring the long distance can be further improved. By narrowing the pulse width for the longer distance, it is possible to achieve high sensitivity for the longer distance while keeping average power of the reference light constant. In addition, by increasing the pulse width for the closer distance, the number of times of measurement at the close distance can be reduced.

(Sixth Example Embodiment)

Hereinafter, a sixth example embodiment will be described with reference to the drawing. In the present example embodiment, an example in which reference light is changed to a pulse similarly to the first example embodiment and further a plurality of reference light pulses are included in a distance measurement period will be described. Note that, a configuration of an optical distance measurement device is similar to that of the first example embodiment.

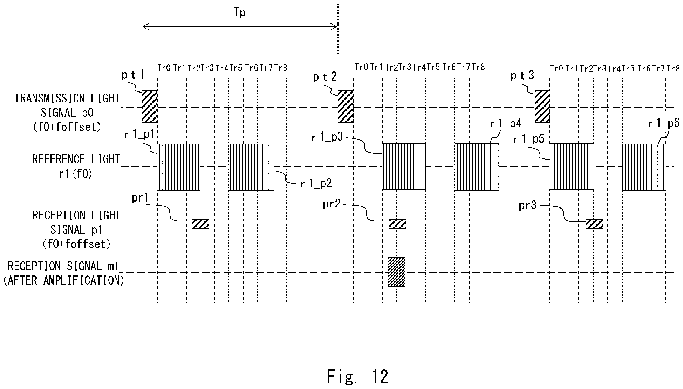

Fig. 12 illustrates an example of reference light of the optical distance measurement device according to the present example embodiment. As illustrated in Fig. 12, in the present example embodiment, a reference light modulator 202 generates a plurality of reference light pulses for each distance measurement period Tp (also referred to as a frame) for repeatedly transmitting a transmission light pulse. In this example, two reference light pulses are generated within the distance measurement period Tp. For example, a pulse width of the reference light pulse is three times the transmission light pulse (reception light pulse). Reference light pulses r1_p1 and r1_p2 are generated after transmission of a transmission light pulse pt1, reference light pulses r1_p3 and r1_p4 are generated after transmission of a transmission light pulse pt2, and reference light pulses r1_p5 and r1_p6 are generated after transmission of a transmission light pulse pt3. Note that, not only two reference light pulses but also any number of reference light pulses may be generated within the distance measurement period Tp, or reference light having different intensity and a pulse width may be generated.

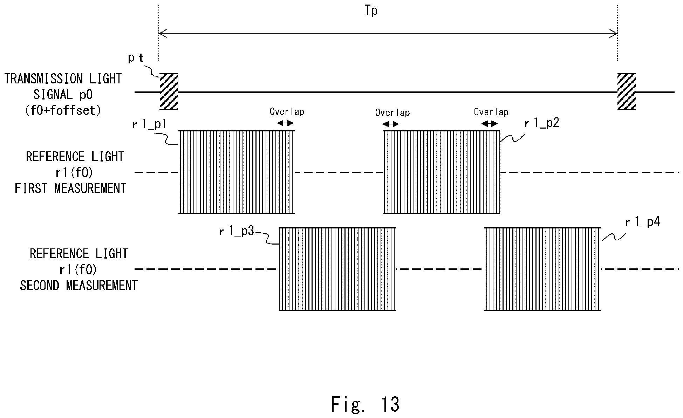

In addition, as illustrated in Fig. 13, similarly to the second example embodiment, a plurality of reference light pulses in a frame (distance measurement period Tp) may be overlapped in previous and subsequent frames with each other. In Fig. 13, reference light pulses r1_p1 and r1_p2 are generated in a frame of first measurement, and reference light pulses r1_p3 and r1_p4 are generated in a frame of second measurement. For example, a rear end portion of the reference light pulse r1_p1 at the first measurement and a front end portion of the reference light pulse r1_p3 at the second measurement are overlapped with each other, the rear end portion of the reference light pulse r1_p3 at the second measurement and the front end portion of the reference light pulse r1_p2 at the first measurement are overlapped with each other, and the rear end portion of the reference light pulse r1_p2 at the first measurement and the front end portion of the reference light pulse r1_p4 at the second measurement are overlapped with each other.

As described above, in the present example embodiment, a plurality of reference light pulses are generated within one frame (distance measurement period) of a transmission light pulse. Accordingly, since a plurality of distance measurement ranges can be measured in one frame, the number of times of measurement (the number of frames) for performing distance measurement on an entire range can be reduced, and a measurement speed can be increased. In addition, by overlapping a plurality of reference light pulses for each frame, it is possible to reliably generate a reception signal even when reception light is received at any timing.

(Seventh Example Embodiment)

Hereinafter, a seventh example embodiment will be described with reference to the drawing. In the present example embodiment, an example in which intensity of a pulse of reference light is formed into a linear taper shape according to a distance measurement range will be described. Note that, a configuration of an optical distance measurement device is similar to that of the first example embodiment.

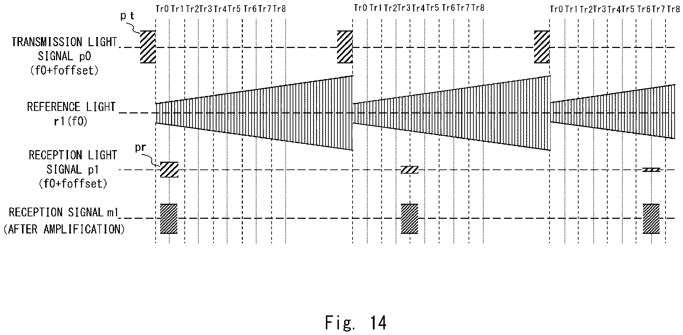

Fig. 14 illustrates an example of reference light of the optical distance measurement device according to the present example embodiment. As illustrated in Fig. 14, in the present example embodiment, a reference light modulator 202 performs an intensity modulation on a light source r0, and intensity of reference light is made to be continuously variable according to the distance measurement range for each transmission of a transmission light pulse (within a distance measurement period). Specifically, the intensity of the reference light is gradually increased linearly as a distance to be measured becomes longer (the distance measurement range becomes farther). In other words, the intensity of the reference light changes to a linear taper shape. For example, the intensity of the reference light is proportional to the distance to be measured (the distance of the distance measurement range). In addition, average power of the reference light is constant similarly to the first example embodiment and the like.

As described above, in the present example embodiment, intensity of reference light is made to be continuously variable according to a distance to be measured, and is made stronger as the distance to be measured becomes a longer distance. In particular, the intensity of the reference light is increased to a linear taper shape according to the distance. Thus, it is possible to prevent a signal level of a reception signal from decreasing according to the distance to be measured, and to improve reception sensitivity. In addition, in one measurement, it is possible to achieve high sensitivity over a longer distance while keeping average power of the reference light constant.

(Eighth Example Embodiment)

Hereinafter, an eighth example embodiment will be described with reference to the drawing. In the present example embodiment, an example in which intensity of a pulse of reference light is formed into a curved taper shape according to a distance measurement range will be described. Note that, a configuration of an optical distance measurement device is similar to that of the first example embodiment.

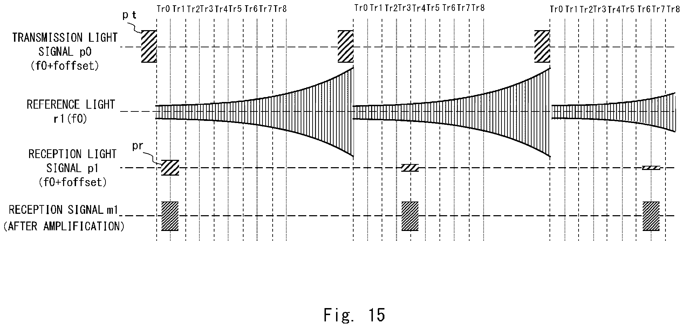

Fig. 15 illustrates an example of reference light of the optical distance measurement device according to the present example embodiment. As illustrated in Fig. 15, in the present example embodiment, a reference light modulator 202 performs an intensity modulation on a light source r0, and intensity is made to be continuously variable according to the distance measurement range for each transmission of a transmission light pulse (within a distance measurement period).

Specifically, the intensity of the reference light is gradually increased in a curved manner as a distance to be measured becomes longer (the distance measurement range becomes farther). In other words, the intensity of the reference light changes to a curved taper shape (parabolic taper shape, exponential taper shape). For example, the intensity of the reference light is proportional to the square of the distance to be measured (the distance of the distance measurement range). In addition, average power of the reference light is constant similarly to the first example embodiment and the like.

In the present example embodiment, the intensity of the reference light is increased by a square characteristic with respect to the distance to be measured. Specifically, the intensity of the reference light is increased according to an attenuation characteristic of a LiDAR equation. The LiDAR equation indicates a characteristic of a reception light with respect to a transmission light in the optical distance measurement device, and power $P_r$ of the reception light is expressed by the following equation (5).

[Mathematical 5]

$$P_r(\lambda) = \frac{P_0 K T^2(R)\sigma_0 A_r}{R^2} \quad \cdots (5)$$

In the equation (5), $P_0$ is intensity of the transmission light, R is a distance to an object, $A_r$ is an area of a reception aperture, K is total efficiency of a transmission reception optical system, $\lambda$ is a reception wavelength, T(R) is a light transmittance of an atmosphere, and $\delta_0$ is a scattering coefficient of an object surface. As in the equation (5), the power of the reception light is inversely proportional to the square of the distance. The intensity of the reference light is made to be variable in such a way as to cancel the attenuation characteristic of the reception light according to the distance. For example, since the intensity of the reception light attenuates in inverse proportion to the square of the distance, the intensity of the reference light is increased in proportion to the square of the distance.

By using such reference light, intensity of a reception signal can be kept constant regardless of the distance to be measured. In other words, it is not necessary to consider a condition of the distance in the LiDAR equation, and when another measurement condition is the same, the intensity of the reception signal becomes constant. Therefore, a measurement condition other than the distance may be detected according to the intensity of the reception signal by using the reference light according to the present example embodiment. For example, since the scattering coefficient of an object surface is changed in a case where the surface of the object is slick (smooth) or rough (uneven), reflected light is diffused and the intensity of the reception light is lowered as the surface is rougher. Therefore, a surface state of the object may be detected by the intensity of the reception signal. For example, it may be determined whether the surface of the object is rough or slick, according to a comparison result of the intensity of the reception signal with a predetermined threshold value.

As described above, in the present example embodiment, intensity of reference light is made to be continuously variable according to a distance to be measured, and is made stronger as the distance to be measured becomes a longer distance. In particular, the intensity of the reference light is increased to a curved taper shape according to the distance. Thus, similarly to the seventh example embodiment, it is possible to achieve high sensitivity over a longer distance. In addition, by increasing the intensity of the reference light according to an attenuation characteristic of a reception light of a LiDAR equation, it is possible to keep the intensity of the reception signal constant regardless of the distance measurement range in case of the same reflection condition. Thus, it is possible to detect a measurement condition other than the distance, for example, a surface state of an object, and the like.

Reference light may be generated by appropriately combining the above-described example embodiments. For example, any one of first to sixth example embodiments, and seventh and eighth example embodiments may be combined, and thereby intensity of a reference light pulse may be formed into a taper shape.

Although the present disclosure has been described with reference to the example embodiments, the present disclosure is not limited to the above-described example embodiments.

**Reference Signs List**

| | |
|---|---|
| 10 | OPTICAL DISTANCE MEASUREMENT DEVICE |
| 11 | LIGHT TRANSMISSION UNIT |
| 12 | LIGHT RECEPTION UNIT |
| 13 | MODULATION UNIT |
| 14 | DETECTION UNIT |

| | |
|---|---|
| 15 | DISTANCE CALCULATION UNIT |
| 100 | OPTICAL DISTANCE MEASUREMENT DEVICE |
| 101 | LIGHT SOURCE DEVICE |
| 102 | OPTICAL DISTANCE MEASUREMENT PULSE MODULATION SIGNAL GENERATION UNIT |
| 103 | LIGHT MODULATOR |
| 104 | LIGHT TRANSMISSION UNIT |
| 105 | LIGHT RECEPTION UNIT |
| 106 | COHERENT LIGHT RECEIVER |
| 106a | OPTICAL INTERFERENCE SYSTEM |
| 106b | OPTICAL/ELECTRIC CONVERTER |
| 107 | ADC |
| 108 | BPF |
| 109 | TIMING EXTRACTION UNIT |
| 110 | DISTANCE CALCULATION UNIT |
| 201 | REFERENCE LIGHT MODULATION SIGNAL GENERATION UNIT |
| 202 | REFERENCE LIGHT MODULATOR |

**Claims**

1. An optical distance measurement device comprising:

   light transmission means for transmitting distance measurement light to a measurement object;
   light reception means for receiving reflected light being reflected from the measurement object by the transmitted distance measurement light;
   modulation means for generating reference light acquired by performing intensity modulation on a light source according to a distance measurement range;
   detection means for generating a reception signal by causing the received reflected light and the generated reference light to interfere with each other; and
   distance calculation means for calculating a distance to the measurement object, based on the transmitted distance measurement light and the generated reception signal,
   **characterized in that**
   the reference light has intensity in a specific distance measurement range, that is stronger than intensity in another distance measurement range.

2. The optical distance measurement device according to Claim 1, wherein the reference light has intensity in a case where the distance measurement range is far from the optical distance measurement device, that is stronger than intensity in a case where the distance measurement range is close to the optical distance measurement device.

3. The optical distance measurement device according to Claim 1 or 2, wherein average power of the reference light is the same as power of a light source before performing the intensity modulation.

4. The optical distance measurement device according to any one of Claims 1 to 3, wherein intensity of the reference light changes to a pulse shape.

5. The optical distance measurement device according to Claim 4, wherein a width of the reference light is wider than a width of the distance measurement light.

6. The optical distance measurement device according to Claim 4 or 5, wherein

   the light transmission means repeatedly transmits the distance measurement light at a predetermined distance measurement period, and
   the modulation means generates the reference light for each of the distance measurement periods.

7. The optical distance measurement device according to Claim 6, wherein the modulation means generates the reference light in the distance measurement range in which a distance from the optical distance measurement device is different, for each of the distance measurement periods.

8. The optical distance measurement device according to Claim 7, wherein the modulation means generates the reference light in generation order in such a way that the distance measurement range becomes far from the optical distance measurement device or the distance measurement range becomes close to the optical distance measurement device.

9. The optical distance measurement device according to Claim 8, wherein the modulation means generates the reference light in such a way that the distance measurement ranges in reference light before and after in the generation order overlap with each other.

10. The optical distance measurement device according to any one of Claims 6 to 9, wherein intensity of the reference light is different for each of the distance measurement periods.

11. The optical distance measurement device according to any one of Claims 6 to 10, wherein a width of the reference light varies according to the distance measurement range.

12. The optical distance measurement device according to Claim 11, wherein the reference light has a width in a case where the distance measurement range is far from the optical distance measurement device, that is narrower than a width in a case where the distance measurement range is close to the optical distance measurement device.

13. The optical distance measurement device according to Claim 11 or 12, wherein the reference light has a width in a specific distance measurement range, that is narrower than a width in another distance measurement range.

14. An optical distance measurement method comprising:

transmitting distance measurement light to a measurement object;
receiving reflected light being reflected from the measurement object by the transmitted distance measurement light;
generating reference light acquired by performing intensity modulation on a light source according to a distance measurement range;
generating a reception signal by causing the received reflected light and the generated reference light to interfere with each other; and
calculating a distance to the measurement object, based on the transmitted distance measurement light and the generated reception signal,
**characterized in that**
the reference light has intensity in a specific distance measurement range, that is stronger than intensity in another distance measurement range.

**Patentansprüche**

1. Optische Abstandsmessvorrichtung, aufweisend:

eine Lichtübertragungseinrichtung zum Übertragen von Abstandsmesslicht an ein Messobjekt;
eine Lichtempfangseinrichtung zum Empfangen von reflektiertem Licht, das vom Messobjekt durch das übertragene Abstandsmesslicht reflektiert wird;
eine Modulationseinrichtung zum Erzeugen von Referenzlicht, das durch Intensitätsmodulation einer Lichtquelle gemäß einem Abstandsmessbereich erhalten wird;
eine Erfassungseinrichtung zum Erzeugen eines Empfangssignals durch Veranlassen, dass das empfangene reflektierte Licht und das erzeugte Referenzlicht miteinander interferieren; und
eine Abstandsberechnungseinrichtung zum Berechnen eines Abstands zu dem Messobjekt basierend auf dem übertragenen Abstandsmesslicht und dem erzeugten Empfangssignal,
**dadurch gekennzeichnet, dass**
das Referenzlicht in einem spezifischen Abstandsmessbereich eine Intensität aufweist, die stärker ist als die Intensität in einem anderen Abstandsmessbereich.

2. Optische Abstandsmessvorrichtung nach Anspruch 1, wobei das Referenzlicht in einem Fall, in dem der Abstandsmessbereich weit von der optischen Abstandsmessvorrichtung entfernt ist, eine Intensität aufweist, die stärker ist als die Intensität in einem Fall, in dem der Abstandsmessbereich in der Nähe der optischen Abstandsmessvorrichtung liegt.

3. Optische Abstandsmessvorrichtung nach Anspruch 1 oder 2, wobei die durchschnittliche Leistung des Referenzlichts der Leistung einer Lichtquelle vor der Intensitätsmodulation gleicht.

4. Optische Abstandsmessvorrichtung nach einem der Ansprüche 1 bis 3, wobei sich die Intensität des Referenzlichts in eine Pulsform ändert.

5. Optische Abstandsmessvorrichtung nach Anspruch 4, wobei die Breite des Referenzlichts größer ist als die Breite des Abstandsmesslichts.

6. Optische Abstandsmessvorrichtung nach Anspruch 4 oder 5, wobei

   die Lichtübertragungseinrichtung das Abstandsmesslicht in einer vorgegebenen Abstandsmessperiode wiederholt überträgt, und
   die Modulationseinrichtung das Referenzlicht für jeden der Abstandsmessperioden erzeugt.

7. Optische Abstandsmessvorrichtung nach Anspruch 6, wobei die Modulationseinrichtung das Referenzlicht in dem Abstandsmessbereich, in dem ein Abstand von der optischen Abstandsmessvorrichtung unterschiedlich ist, für jede der Abstandsmessperioden erzeugt.

8. Optische Abstandsmessvorrichtung nach Anspruch 7, wobei die Modulationseinrichtung das Referenzlicht in einer Erzeugungsreihenfolge derart erzeugt, dass der Abstandsmessbereich weit von der optischen Abstandsmessvorrichtung entfernt wird oder der Abstandsmessbereich nahe der optischen Abstandsmessvorrichtung wird.

9. Optische Abstandsmessvorrichtung nach Anspruch 8, wobei die Modulationseinrichtung das Referenzlicht derart erzeugt, dass sich die Abstandsmessbereiche im Referenzlicht, die in der Erzeugungsreihenfolge aufeinanderfolgen, einander überlappen.

10. Optische Abstandsmessvorrichtung nach einem der Ansprüche 6 bis 9, wobei die Intensität des Referenzlichts für jede der Abstandsmessperioden unterschiedlich ist.

11. Optische Abstandsmessvorrichtung nach einem der Ansprüche 6 bis 10, wobei eine Breite des Referenzlichts gemäß dem Abstandsmessbereich variiert.

12. Optische Abstandsmessvorrichtung nach Anspruch 11, wobei das Referenzlicht in einem Fall, in dem der Abstandsmessbereich weit von der optischen Abstandsmessvorrichtung entfernt ist, eine Breite aufweist, die schmaler ist als eine Breite in einem Fall, in dem der Abstandsmessbereich in der Nähe der optischen Abstandsmessvorrichtung liegt.

13. Optische Abstandsmessvorrichtung nach Anspruch 11 oder 12, wobei das Referenzlicht in einem spezifischen Abstandsmessbereich eine Breite aufweist, die schmaler ist als eine Breite in einem anderen Abstandsmessbereich.

14. Optisches Abstandsmessverfahren, aufweisend:

   Übertragen von Abstandsmesslicht zu einem Messobjekt;
   Empfangen von reflektiertem Licht, das von dem Messobjekt durch das übertragene Abstandsmesslicht reflektiert wird;
   Erzeugen von Referenzlicht, das durch Ausführen einer Intensitätsmodulation einer Lichtquelle gemäß einem Abstandsmessbereich erhalten wird;
   Erzeugen eines Empfangssignals durch Veranlassen, dass das empfangene reflektierte Licht und das erzeugte Referenzlicht miteinander interferieren; und
   Berechnen eines Abstands zu dem Messobjekt basierend auf dem übertragenen Abstandsmesslicht und dem erzeugten Empfangssignal,
   **dadurch gekennzeichnet, dass**
   das Referenzlicht in einem spezifischen Abstandsmessbereich eine Intensität aufweist, die stärker ist als die Intensität in einem anderen Abstandsmessbereich.

**EP 4 212 907 B1**

**Revendications**

1. Dispositif de mesure de distance optique comprenant :

   un moyen d'émission de lumière pour émettre une lumière de mesure de distance vers un objet de mesure ;
   des moyens de réception de lumière pour recevoir la lumière réfléchie, qui est réfléchie par l'objet de mesure, par la lumière de mesure de distance émise ;
   un moyen de modulation pour générer une lumière de référence acquise en effectuant une modulation d'intensité sur une source de lumière selon une plage de mesure de distance ;
   des moyens de détection pour générer un signal de réception en provoquant une interférence entre la lumière réfléchie reçue et la lumière de référence générée ; et
   des moyens de calcul de distance pour calculer une distance à l'objet de mesure, sur la base de la lumière de mesure de distance émise et du signal de réception généré,
   **caractérisé en ce que** la lumière de référence présente une intensité comprise dans une plage de mesure de distance spécifique, qui est plus forte que l'intensité dans une autre plage de mesure de distance.

2. Dispositif de mesure de distance optique selon la revendication 1, dans lequel la lumière de référence présente une intensité dans un cas où la plage de mesure de distance est éloignée du dispositif de mesure de distance optique, qui est plus forte que l'intensité dans un cas où la plage de mesure de distance est proche du dispositif de mesure de distance optique.

3. Dispositif de mesure de distance optique selon la revendication 1 ou 2, dans lequel la puissance moyenne de la lumière de référence est la même que la puissance d'une source de lumière avant la réalisation de la modulation d'intensité.

4. Dispositif de mesure de distance optique selon l'une quelconque des revendications 1 à 3, dans lequel l'intensité de la lumière de référence se transforme en une forme d'impulsion.

5. Dispositif de mesure de distance optique selon la revendication 4, dans lequel une largeur de la lumière de référence est plus large qu'une largeur de la lumière de mesure de distance.

6. Dispositif de mesure de distance optique selon la revendication 4 ou 5, dans lequel

   le moyen d'émission de lumière émet de manière répétée la lumière de mesure de distance dans une période de mesure de distance prédéterminée, et
   le moyen de modulation génère la lumière de référence pour chacune des périodes de mesure de distance.

7. Dispositif de mesure de distance optique selon la revendication 6, dans lequel le moyen de modulation génère la lumière de référence dans la plage de mesure de distance dans laquelle une distance au dispositif de mesure de distance optique est différente, pour chacune des périodes de mesure de distance.

8. Dispositif de mesure de distance optique selon la revendication 7, dans lequel le moyen de modulation génère la lumière de référence dans un ordre de génération de sorte que la plage de mesure de distance s'éloigne du dispositif de mesure de distance optique ou que la plage de mesure de distance s'approche du dispositif de mesure de distance optique.

9. Dispositif de mesure de distance optique selon la revendication 8, dans lequel le moyen de modulation génère la lumière de référence de telle sorte que les plages de mesure de distance, pour la lumière de référence avant et après dans l'ordre de génération, se chevauchent.

10. Dispositif de mesure de distance optique selon l'une quelconque des revendications 6 à 9, dans lequel l'intensité de la lumière de référence est différente pour chacune des périodes de mesure de distance.

11. Dispositif de mesure de distance optique selon l'une quelconque des revendications 6 à 10, dans lequel une largeur de la lumière de référence varie en fonction de la plage de mesure de distance.

12. Dispositif de mesure de distance optique selon la revendication 11, dans lequel la lumière de référence présente une largeur dans un cas où la plage de mesure de distance est éloignée du dispositif de mesure de distance optique, qui est plus étroite qu'une largeur dans un cas où la plage de mesure de distance est proche du dispositif de mesure de distance optique.

**13.** Dispositif de mesure de distance optique selon la revendication 11 ou 12, dans lequel la lumière de référence présente une largeur dans une plage de mesure de distance spécifique, qui est plus étroite qu'une largeur dans une autre plage de mesure de distance.

**14.** Procédé de mesure de distance optique, comprenant :

l'émission d'une lumière de mesure de distance vers un objet de mesure ;
la réception d'une lumière réfléchie, qui est réfléchie par l'objet de mesure, par la lumière de mesure de distance émise ;
la génération d'une lumière de référence acquise en réalisant une modulation d'intensité sur une source de lumière selon une plage de mesure de distance ;
la génération d'un signal de réception en provoquant une interférence entre la lumière réfléchie reçue et la lumière de référence générée ; et
le calcul d'une distance à l'objet de mesure, sur la base de la lumière de mesure de distance émise et du signal de réception généré,
**caractérisé en ce que** la lumière de référence présente une intensité comprise dans une plage de mesure de distance spécifique, qui est plus forte que l'intensité dans une autre plage de mesure de distance.

OPTICAL DISTANCE
MEASUREMENT DEVICE

LIGHT TRANSMISSION
UNIT

LIGHT RECEPTION
UNIT

MEASUREMENT
OBJECT

DISTANCE R

Tp

TRANSMISSION
LIGHT

Tw

TRANSMISSION LIGHT PULSE

RECEPTION
LIGHT

RECEPTION LIGHT PULSE

time

Td

T0          T1

Fig. 1

18

Fig. 2

Fig. 3

Fig. 4

Fig. 5

Fig. 6

Fig. 7

Fig. 8

Fig. 9

Fig. 10

Fig. 11

28

Fig. 12

TRANSMISSION LIGHT
SIGNAL p0
(f0+foffset)

p t

Tp

Overlap    Overlap    Overlap

r 1_p1                                    r 1_p2

REFERENCE LIGHT
r1(f0)
FIRST MEASUREMENT

r 1_p3                                    r 1_p4

REFERENCE LIGHT
r1(f0)
SECOND MEASUREMENT

Fig. 13

Fig. 14

Fig. 15

**REFERENCES CITED IN THE DESCRIPTION**

**Patent documents cited in the description**

- US 2018224547 A1

- JP 2014202610 A